(19) Europäisches Patentamt
European Patent Office
Office européen des brevets

(11) **EP 2 954 986 B1**

(12) **EUROPÄISCHE PATENTSCHRIFT**

(45) Veröffentlichungstag und Bekanntmachung des Hinweises auf die Patenterteilung:
**06.05.2020   Patentblatt 2020/19**

(51) Int Cl.:
***B25J 9/16*** *(2006.01)*

(21) Anmeldenummer: **14171752.0**

(22) Anmeldetag: **10.06.2014**

(54) **Vorrichtung und Verfahren zum Steuern und Regeln eines Mehrkörpersystems**

Apparatus and method for managing and controlling motion of a multiple body system

Dispositif et procédé de commande et de réglage d'un système multi-corps

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.12.2015   Patentblatt 2015/51**

(73) Patentinhaber: **Siemens Aktiengesellschaft**
**80333 München (DE)**

(72) Erfinder:
• **Bitterolf, David**
  **91056 Erlangen (DE)**
• **Hamann, Jens**
  **90765 Fürth (DE)**
• **Hamm, Carsten**
  **91058 Erlangen (DE)**
• **Tauchmann, Sven**
  **09119 Chemnitz (DE)**

(56) Entgegenhaltungen:
EP-A2- 1 980 374          EP-A2- 2 492 062
DE-A1-102007 024 143      DE-A1-102011 111 758

**Beschreibung**

Die vorliegende Erfindung betrifft eine Vorrichtung zum Steuern und Regeln einer Bewegung eines Systems mit mehreren, kinematisch zusammenwirkenden Einzelkörpern, von denen mindestens einer ein Antrieb ist. Darüber hinaus betrifft die vorliegende Erfindung ein Verfahren zum Steuern und Regeln einer Bewegung eines solchen Systems. Unter einem derartigen System wird beispielweise eine Anlage, eine Bearbeitungsmaschine, eine Verarbeitungsmaschine und insbesondere auch ein Roboter oder eine Werkzeugmaschine verstanden. Bei dem Antrieb handelt es sich beispielsweise um einen elektrischen Motor oder einen hydraulischen oder pneumatischen Antrieb.

Mechanische Systeme dieser Art werden verbreitet in der Fertigung eingesetzt. Eine wichtige Voraussetzung zum Erreichen eines qualitativ guten Ergebnisses ist die absolute Genauigkeit dieser Fertigungsmittel. Jedoch wirken auf mechanische Gebilde externe Störkräfte (z. B. Schwerkraft, Prozesskraft, Reibung, Lastwechsel usw.), die aufgrund der Elastizität der Gelenke und Bauteile (nachfolgend auch Einzelkörper genannt) zu Abweichungen am sogenannten "TCP" (Tool Center Point) führen können. Unter Umständen ist die Stellungsabhängigkeit der Abweichung am TCP aufgrund der Störkräfte sehr stark. So wird beispielsweise ein Roboterarm im ausgestreckten Zustand am freien Ende weiter nach unten gezogen als im eingezogenen oder abgewinkelten Zustand. Ein diesbezügliches Maß ist die absolute statische Genauigkeit.

Diesem Problem der absoluten statischen Genauigkeit wurde bislang dadurch begegnet, dass bei geregelten Achsen ein zweites, direktes Messsystem auf der Lastseite, TCP-nah, eingesetzt wird. Über den Lageregelkreis wird die Stellung des Motors bzw. Antriebs so weit angepasst, dass die notwendige Kompensationskraft über die Antriebsstrangfeder zur Struktur übertragen wird. Der Einsatz eines zweiten Messsystems ist mit erheblichen Zusatzkosten für die Hardware verbunden und erfordert eine aufwendige konstruktive Anpassung für die Anbringung des Messsystems.

Ein weiterer Ansatz zur Verbesserung der absoluten statischen Genauigkeit besteht darin, bezogen auf eine Referenzposition die Abweichung am TCP in einer Vielzahl an Punkten des Arbeitsraums zu vermessen und als Kompensationswert auf den Sollwertkanal zu addieren bzw. vom Istwertkanal zu subtrahieren. Der Nachteil dieser Methode ist der notwendige Aufwand und die Kosten für die Vermessung des Arbeitsraums bzw. des Roboters/der Maschine. Die Vermessung der Abweichungen erfordert die Bestückung der Anlage mit externen Messmitteln. Das Raster der Messung wird im Einzelfall festgelegt. Die Analyse muss in jeder baugleichen Anlage wiederholt werden. Die tabellarisch hinterlegten Korrekturwerte sind zudem lastabhängig, d.h. sie gelten genau für einen Lastfall. Ändert sich z. B. die Beladung, gelten die Werte nicht mehr.

Hierzu ist aus der Druckschrift EP 1 980 374 A2 eine Robotersteuerung bekannt, in der ein absolut genaues Modell zum Steuern eines Industrieroboters gespeichert ist. Im Anfangspunkt und im Endpunkt der Bewegung werden also im jeweils eingeschwungenen System Störkräfte für die Positionierung berücksichtigt.

Ein weiteres wichtiges Merkmal ist die sogenannte "quasi-statische Genauigkeit". Während der Beschleunigungsphase wirken gleichermaßen die Motorkraft und Gegenkraft in einem Gelenk. Die Gegenkraft stützt sich auf einem nicht unendlich steifen Gebilde ab und kann durchaus parasitäre Bewegungen am TCP verursachen. Besitzt ein Roboterarm beispielsweise mehrere Glieder, die jeweils mit einem Motor zueinander bewegbar sind (ein Glied mit zugehörigem Antrieb bzw. Motor stellt eine Bewegungsachse, kurz "Achse" dar), so kann sich die Bewegung, insbesondere eine Beschleunigung, des einen Glieds auf das andere auswirken, wodurch die quasi-statische Genauigkeit beeinflusst wird. Hierfür wird bei Werkzeugmaschinen bislang die aufgrund einer Beschleunigung der Leitachse entstandene parasitäre Bewegung mit einem als Lagesollwert aufgeschalteten Kompensationswert kompensiert.

Bei der Drehbewegung einer Achse wird vielfach das Moment durch eine sogenannte Momentenvorsteuerung gesteuert. Die Parametrierung der Momentenvorsteuerung erfordert die Eingabe des Achsenträgheitsmoments bezogen auf den Motor. An Industrierobotern ist diese Angabe jedoch aufgrund des Aufbaus nicht über den Arbeitsraum konstant. Die vom Motor aus gesehene Gesamtträgheit ist eine Funktion der Gelenkstellung. Zur Berechung eines Momentensollwerts wird bislang die Motorbeschleunigung mit einem vorbestimmten Wert der Achsenträgheit multipliziert.

Die Parametrierung der maximalen Achsenbeschleunigung erfolgt als Folge der Auslegung des Motors und des Leistungsteils und wird achsenweise aus dem maximal zulässigen Strom und der Achsenträgheit abgeleitet. Da die maximale Beschleunigung als konstanter Wert einzutragen ist, ist für dessen Parametrierung nur die Stelle relevant, wo die auf den Motor bezogene Achsenträgheit ihr Maximum erreicht. Daraus folgt, dass in den Bereichen, wo dieser Wert nicht erreicht wird, die Stromreserve nicht ausgenutzt wird und eine höhere Beschleunigungsgrenze theoretisch möglich wäre. Daher wäre es unter Umständen wünschenswert, eine Beschleunigungsreserve für jede Stellung bzw. eine Anpassung der Beschleunigungsgrenze zur besseren Ausnutzung der Stromgrenze zu berechnen. Bei der Bahnplanung werden positionsabhängige Beschleunigungsgrenzen bislang nicht berücksichtigt.

Insbesondere bei Industrierobotern wird die Mobilität und Flexibilität des Arbeitsmittels sehr geschätzt. Jedoch erfordert dies konstruktive Randbedingungen, die den Roboter zu einem stark schwingungsanfälligen Gebilde machen. Aufgrund der fehlenden Messmöglichkeiten ist eine elektrische Bedämpfung dieser Schwingung nicht möglich. Ein Teil der Anregung ergibt sich direkt aus den Führungsgrößen. Daher sollte hinsichtlich der Schwingungen das Führungsverhalten entsprechend angepasst sein. Eine mögliche Abhilfe besteht darin, den Frequenzinhalt der Fahrprofile durch eine Reduzierung des Rucks so zu entschärfen, dass Eigenresonanzen nicht mehr angeregt werden. Der Nachteil dieser Methode ist die zum Teil starke notwendige Einschränkung der Achsendynamik.

Aufgrund der zum Teil komplexen Bewegungstransformation und der sich daraus ergebenden Ausgleichsbewegungen ist es keine triviale Aufgabe, im Vorfeld Kollisionsgefahren zu identifizieren. Auch eine Überwachung von Messsignalen (z. B. Motorstrom) ist aufgrund der zum Teil stark variablen Belastung nicht möglich. Eine verbesserte Kollisionsüberwachung wäre also erstrebenswert. Bei bislang bekannten Lösungsansätzen hierzu werden die mittels eines Modells berechneten Motorströme mit den real gemessenen Motorströmen verglichen, und bei unzulässig großen Abweichungen wird die Maschine/der Roboter gestoppt. Ein solches System ist beispielsweise aus der Druckschrift EP 1 403 746 B1 bekannt.

Aus der Druckschrift DE 10 2007 024 143 A1 ist eine Vorrichtung sowie ein Verfahren zum Steuern und Regeln einer Bewegung eines Systems mit mehreren, kinematisch zusammenwirkenden Einzelkörpern, von denen mindestens einer mit einem Antrieb bewegbar ist, bekannt. Den Roboter kennzeichnende Kraftwerte werden fortlaufend während der Bewegung des Systems berechnet. Außerdem wird eine kompensierende Ausgleichsgröße auf der Basis von Sollkoordinaten ebenfalls fortlaufend während der Bewegung des Systems berechnet. Eine kraftbildende Größe für den mindestens einen Antrieb wird in Abhängigkeit von den Sollkoordinaten und der mindestens einen Ausgleichsgröße fortlaufend während der Bewegung geregelt.

Die Aufgabe der vorliegenden Erfindung besteht somit darin, eine Vorrichtung zum Steuern und Regeln und ein entsprechendes Verfahren zum Steuern und Regeln einer Bewegung eines Systems mit mehreren, kinematisch zusammenwirkenden Einzelkörpern vorzuschlagen, bei denen die Bewegung des Systems als solche genauer ausgeführt werden kann.

Erfindungsgemäß wird diese Aufgabe gelöst durch eine Vorrichtung nach Anspruch 1.

Darüber hinaus wird erfindungsgemäß bereitgestellt ein Verfahren nach Anspruch 10.

Im Falle eines elektrischen Motors als Antrieb handelt es sich bei der kraftbildenden Größe um den elektrischen Strom, während die kraftbildende Größe bei einem hydraulischen oder pneumatischen Antrieb der Druck ist.

In vorteilhafter Weise wird also die Bewegung des Systems fortlaufend dynamisch geregelt. Es werden also ständig während der Bewegung Kraftvektoren und entsprechende Ausgleichsgrößen neu berechnet, so dass eine vorgegebene Bewegungsbahn besser eingehalten werden kann. Die genaue Einhaltung von Bewegungsbahnen ist bei vielen Fertigungsaufgaben notwendig, nicht jedoch bei den meisten Pick-and-Place-Aufgaben, bei denen bekannte Lösungen gemäß EP 1 980 374 A2 genügen.

Die Ausgleichsgröße kann ein Ausgleichsdrehmoment, eine Ausgleichskraft, eine Ausgleichsgeschwindigkeit oder eine Ausgleichsposition sein. Somit kann jede dieser Größen einzeln oder in Kombination zum Ausgleich herangezogen werden. Bei kaskadierter Regelung führt eine Steuerung mit dem Ausgleichsdrehmoment als Ausgleichsgröße zu einer rascheren Kompensation der Störkräfte. Eine Steuerung mit der Ausgleichsposition als Ausgleichsgröße führt zu einer genaueren Kompensation der Störkräfte.

Die Lastrecheneinrichtung zieht zum Berechnen des jeweiligen Kraftvektors ein Lastmodell heran, in dem eine Stelle, Richtung und Amplitude einer Krafteinleitung in einen der Einzelkörper berücksichtigt sind. Auf diese Weise kann die Krafteinleitung mit all ihren Parametern dynamisch während einer Bewegung berücksichtigt werden.

Besonders vorteilhaft ist außerdem, wenn die Regelungseinheit eine kaskadierte Lageregelung, Geschwindigkeitsregelung und Stromregelung (bzw. Regelung der kraftbildenden Größe) aufweist. Hierdurch kann die Bewegung des Systems in allen Einzelheiten exakt geregelt werden.

Günstigerweise zieht die Momentrecheneinrichtung zum Berechnen des mindestens einen Ausgleichsmoments ein Mehrkörpermodell heran, in dem eine Masse und/oder eine Elastizität und/oder eine Dämpfung und/oder eine lineare Abhängigkeit von Freiheitsgraden jeweils jedes der Einzelkörper berücksichtigt ist/sind. Auf diese Weise können alle oder die wichtigsten mechanischen Größen bei der Modellierung des Systems berücksichtigt werden.

Speziell kann das Mehrkörpermodell auf einem linearen Differenzialgleichungssystem beruhen. Dies hat den Vorteil, dass es ohne hohen Rechenaufwand gelöst werden kann.

Insbesondere ist es vorteilhaft, wenn das Differenzialgleichungssystem auf einer Massenmatrix, einer Dämpfungsmatrix und einer Steifigkeitsmatrix jeweils bezogen auf die Einzelkörper beruht. Damit gehen die wesentlichen mechanischen Größen wie Masse, Dämpfung und Steifigkeit in das Mehrkörpermodell ein.

Ferner können in dem Mehrkörpermodell Trägheitskräfte (gegebenenfalls auch die Corioliskraft) und/oder Kreiselkräfte, die jeweils auf die Einzelkörper wirken, berücksichtig sein. Dadurch lässt sich insbesondere die quasi-statische Genauigkeit der Bewegung erhöhen.

Bei einer weiteren Ausführungsform ist mit der Momentrecheneinrichtung eine maximale Beschleunigung eines der Einzelkörper oder eines Verbunds mehrerer der Einzelkörper fortlaufend während der Bewegung berechenbar. Dies hat den Vorteil, dass in jeder Stellung die Beschleunigungsgrenze zur besseren Ausnutzung der Stromgrenze bzw. Druckgrenze angepasst werden kann.

Bei einer weiteren Ausführungsform sind die Momenteneinrichtung und die Regeleinheit dazu ausgelegt, dass sie fortlaufend während der Bewegung die Anregung mindestens einer Eigenfrequenz des Systems reduzieren. Dies bedeutet, dass die Eigenfrequenzen weniger angeregt werden, was zu einem besseren Bewegungsverhalten des Systems führt.

Die Vorrichtung zum Steuern und Regeln kann ein Modell der Regelstrecke des Systems aufweist, wobei mit dem Modell mindestens eine ideale Führungsgröße für den Antrieb berechenbar ist. Damit kann eine bestimmbare Dynamik für die Achsen vorgegeben werden.

Bei einer weiteren Ausführungsform kann die Vorrichtung zum Steuern und Regeln ein Modell der Regelstrecke des Systems aufweisen, wobei mit dem Modell ein ideales Drehmoment des Antriebs zur Überwachung eines Istdrehmoments des Antriebs berechenbar ist. Mit einem solchen Modell der Regelstrecke lassen sich beispielsweise Antriebmomente des realen Systems überwachen, wodurch auf Kollisionen zurückgeschlossen werden kann.

Die oben im Zusammenhang mit der erfindungsgemäßen Vorrichtung zum Steuern und Regeln geschilderten weiterbildenden Funktionen lassen sich auch als Verfahrensschritte in das erfindungsgemäße Verfahren integrieren.

Die vorliegende Erfindung wird nun anhand der beigefügten Zeichnungen näher erläutert, in denen zeigen:

FIG 1    eine graphische Darstellung eines Modells eines In-dustrieroboters;
FIG 2    eine strukturelle Übersicht einer Störkraftkompensation;
FIG 3    eine strukturelle Übersicht einer Kompensation der aufgrund einer quasi-statischen Kraft entstehenden parasitären Bewegung;
FIG 4    eine strukturelle Übersicht der Momentenvorsteuerung;
FIG 5    eine strukturelle Übersicht der Vorsteuerung mit Sollwertfilter;
FIG 6    eine strukturelle Übersicht der Vorsteuerung mit modellbasierter Zustandsregelung;
FIG 7    ein Simulationsbeispiel mit einem 2D-Roboter;
FIG 8    die Auslenkung des Roboters von FIG 7 gemäß dem Stand der Technik; und
FIG 9    die Auslenkung des Roboters von FIG 7 mit erfindungsgemäßer modellbasierter Kraftkompensation.

Die nachfolgend näher geschilderten Ausführungsbeispiele stellen bevorzugte Ausführungsformen der vorliegenden Erfindung dar.

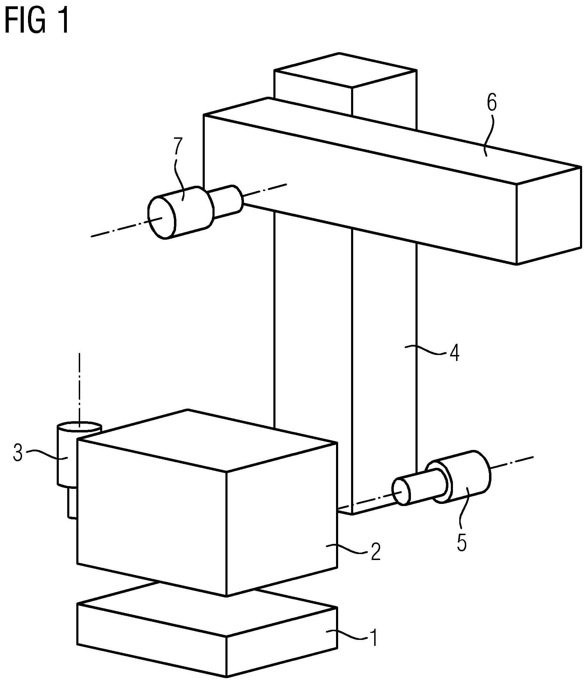

Für ein beliebig ausgestaltetes System (Maschine, Anlage, etc.) der eingangs genannten Art, insbesondere einen Roboter oder eine Werkzeugmaschine, kann eine Vorrichtung zum Steuern und Regeln der Bewegung seiner mehreren, kinematisch zusammenwirkenden Einzelkörper verwendet werden. Ein Beispiel eines solchen Mehrkörpersystems ist in FIG 1 wiedergegeben. Es sind dort symbolisch Komponenten eines Roboters dargestellt. Dieser Roboter steht beispielsweise auf einer Bodenplatte 1. Ein Roboterkörper 2 kann sich an einer Hochachse über der Bodenplatte 1 drehen. Die Drehung erfolgt mittels eines Motors 3. Auch wenn sich die folgenden Beispiele auf einen elektrischen Motor als Antrieb beziehen, kann jeweils auch ein anderer Antrieb verwendet werden. Bei hydraulischen und pneumatischen Antrieben ist dann anstelle des Stroms der Druck die maßgebliche Größe.

Der Roboterkörper 2 stellt zusammen mit dem Motor 3 eine Bewegungsachse (kurz: Achse) dar. An dem Roboterkörper 2 ist ein erster Arm 4 mittels eines Motors 5 drehbar gelagert. Am distalen Ende dieses ersten Arms 4 ist ein zweiter Arm 6 mittels eines weiteren Motors 7 ebenfalls drehbar gelagert. Der Roboter besitzt also hier drei Achsen, von denen die erste Achse mit dem Einzelkörpern 2 (ggf. einschließlich Motor 3), die zweite Achse mit dem Einzelkörpern 4 (ggf. einschließlich Motor 5) und die dritte Achse mit den Einzelkörpern 6 (ggf. einschließlich Motor 7) gebildet ist.

Bewegt sich mindestens eine dieser Achsen, so wird hier von einer Bewegung des Systems gesprochen. Jede Achse bzw. jeder Einzelkörper besitzt jeweils seine individuelle Masse, Dämpfung, Steifigkeit etc. Dies führt dazu, dass sich beispielsweise die Schwerkraft oder eine Prozesskraft unterschiedlich auf das System auswirkt, je nachdem, in welcher Stellung die Achsen zueinander stehen. Wenn beispielsweise an der Spitze des in FIG 1 waagrecht eingezeichneten zweiten Arms 6 eine Kraft nach unten zieht, so hat dies auf die absolute Lage der Spitze des zweiten Arms 6 eine andere Auswirkung als in dem Fall, dass der zweite Arm 6 beispielsweise senkrecht nach oben gerichtet ist. Jede auf das System wirkende Kraft hat somit eine jeweils von der Stellung aller Achsen abhängige Auswirkung.

Das Verhalten des Systems kann in einem Mehrkörpermodell beschrieben werden, das ein dreidimensionales, mechanisches MIMO-Modell (Multiple Input, Multiple Output) darstellt.

Eine Vorrichtung zum Steuern und Regeln (dies und folgendes gilt sinngemäß auch für ein entsprechendes Verfahren) gemäß der vorliegenden Erfindung zum Regeln einer Bewegung eines Systems wie dem Roboter von FIG 1 basiert auf einem solchen Mehrkörpermodell. Das Modell ist vorzugsweise ein dreidimensionales, lineares Mehrkörpermodell. Bestandteile dieses Modells sind physikalische und geometrische Größen wie:

- Masseneigenschaften der einzelnen Körper und Massenverhalten im Raum,
- Elastizität der Gelenke und Antriebsstränge; gegebenenfalls könnte die Elastizität der Körper einbezogen werden,
- lineare Dämpfungseigenschaften der Federelemente,
- geometrische Zwangsbedingungen bzw. lineare Abhängigkeiten zwischen einzelnen Freiheitsgraden und

4

- Definition der Gelenke (Typ, Lage und Ausrichtung).

Sowohl das statische als auch das dynamische Übertragungsverhalten zwischen Ein- und Ausgängen kann mit Hilfe des folgenden linearen Differenzialgleichungssystems beschrieben werden:

$$M\ddot{X} + D\dot{X} + KX = T^{T} f$$

Dabei bedeuten M die Massenmatrix, D die Dämpfungsmatrix, K die Steifigkeitsmatrix und T die rechteckige Transformationsmatrix, die die Beziehung zwischen den Zustandsgrößen X und allen Freiheitsgraden des Modells wiedergibt. Jeder Einzelkörper des Systems (vgl. Bezugszeichen 1, 2, 4 und 6 von FIG 1) ist in sich starr und besitzt genau sechs Freiheitsgrade (drei Translationen und drei Rotationen). Der Vektor f ist der Vektor der Außenkräfte am Schwerpunkt des jeweiligen Einzelkörpers. Dieser Kraftvektor beinhaltet also beispielsweise für jeden Einzelkörper die Schwerkraft und gegebenenfalls eine Prozesskraft und dergleichen (z. B. eine Kraft, die durch ein Drücken eines Werkzeugs gegen ein Werkstück hervorgerufen wird). Der Zustandsvektor X beschreibt die kleinen Bewegungen um den ursprünglichen Arbeitspunkt herum. Somit sind die Matrizen M, D, K und T von den Zustandsgrößen unabhängig. Die Gelenkstellung ist keine Zustandsgröße, sondern weiterer Parameter für die Berechnung der Matrizen M, D, K und T.

Das Modell ist vorzugsweise ein lineares Mehrkörpersystem, bei dem die Stellungsabhängigkeit des Systemverhaltens berücksichtigt wird. Eine verbesserte absolute Genauigkeit kann nämlich dadurch erreicht werden, dass zu jedem Zeitpunkt Motorkräfte zur Kompensation aller Störkräfte eingeleitet werden. Daraus ergibt sich ein Gleichgewichtszustand, in dem die kleinen Abweichungen am TCP null sind.

Eine wichtige Voraussetzung für die Berechnung der Motormomente ist die genaue Kenntnis des Lastfalls. Die Beschreibung des Lastfalls beinhaltet Informationen über die Stelle(n), die Richtung(en) und die Amplitude(n) der Krafteinleitung. Als Kraft werden neben den genannten Störkräften auch Bearbeitungskräfte eingeleitet, wie sie beispielsweise beim Fräsen oder Bohren entstehen.

Die Motormomente und die Stellungen der Einzelkörper (z.B. Roboterarme) sind dann Lösung des folgenden statischen Gleichungssystems:

$$KX = T^{T}(f_{Last} + f_{Mot}) ,$$

wobei der Zustandsvektor X und die Motorkräfte $f_{Mot}$ unbekannt sind. Da dieses Gleichungssystem unterbestimmt ist, muss es mit einer Zwangsbedingung für die Koordinaten des TCP ergänzt werden, nämlich

$$\begin{cases} KX = T^{T}(f_{Last} + f_{Mot}) \\ T_{TCP}X = 0 \end{cases}$$

Die Matrix $T_{TCP}$ ist ein Auszug aus der Matrix T und beschreibt die lineare Abhängigkeit zwischen den Koordinaten des TCP und den Zustandsgrößen. Eine wichtige Voraussetzung für die Lösbarkeit des Problems ist, dass alle zu null deklarierten TCP-Koordinaten von den Motoren bewegbar sind. Dies ist jedoch bei allen hier betrachteten Maschinen- und Roboter-Kinematiken der Fall. Der Roboter muss also das jeweilige Werkzeug in die gewünschte Richtung auch bewegen können.

Die Übertragung des Motormoments zur mechanischen Struktur erfordert das Aufspannen der Antriebsstrangfeder durch einen Winkelversatz am Motor. Dieser Winkelversatz wird aus dem Zustandsvektor X abgeleitet und muss bei der Sollwertgenerierung berücksichtigt werden.

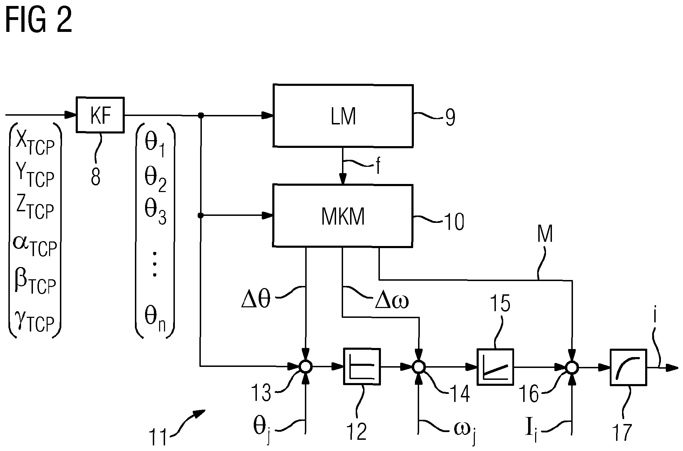

FIG 2 zeigt die Struktur eines Verfahrens bzw. einer entsprechenden Vorrichtung zum Steuern und Regeln für die Kompensation von Störkräften. Von einer übergeordneten Einheit werden Sollkoordinaten für den TCP vorgegeben, nämlich $X_{TCP}$, $Y_{TCP}$ und $Z_{TCP}$ sowie $\alpha_{TCP}$, $\beta_{TCP}$, $\gamma_{TCP}$. In einer Transformationseinheit 8 erfolgt eine Koordinatentransformation (KF) in Gelenkkoordinaten $\theta_1$ bis $\theta_n$, wobei n eine natürliche Zahl, beispielsweise n=6, ist. In einem Lastmodell 9 (LM; ggf. realisiert als Lastrecheneinrichtung) wird für die jeweiligen Gelenkkoordinaten ein Kraftvektor f in Abhängigkeit von einer Stelle, einer Richtung und einer Amplitude der Krafteinleitung ermittelt. Dies wird vorzugsweise für jeden Einzelkörper des Systems durchgeführt.

Ein Mehrkörpermodell 10 (MKM; ggf. realisiert als Momentrecheneinrichtung) verarbeitet die Kraftvektoren bzw. den Kraftvektor f weiter. Auf seiner Basis und der Basis der Gelenkkoordinaten wird je ein Motormoment bzw. ein entsprechendes Stromäquivalent für den jeweiligen Motor jeder Achse berechnet. Außerdem werden in dem Mehrkörpermodell 10 hier auch Winkelversätze $\Delta\theta$ berechnet. Bei diesen Berechnungen werden die Masseneigenschaften, die Elastizität, die Dämpfung und lineare Abhängigkeiten der Freiheitsgrade der jeweiligen Achsen bzw. Einzelkörper berücksichtigt. Vorzugsweise beruht das Mehrkörpermodell 10 auf dem linearen Differenzialgleichungssystem zweiter Ordnung, das oben vorgestellt wurde.

Eine dem Mehrkörpermodell 10 nachgeschaltete Regelungseinheit 11 ermittelt aus den Gelenkkoordinaten $\theta_1$, $\theta_2$, $\theta_3$, ..., $\theta_i$, ..., $\theta_n$, den Winkelversätzen $\Delta\theta$ und den Motormomenten M einen Strom i zum Ansteuern eines in FIG 2 nicht dargestellten Motors einer der Achsen des Systems, wodurch die parasitäre Bewegung auf Grund der Störkräfte reduziert oder kompensiert ist. Die Regelungseinheit weist vorzugsweise eine kaskadierte Lageregelung, Geschwindigkeitsregelung und Stromregelung auf. Für die Lageregelung ist ein Lageregler 12 (vorzugsweise ein P-Regler) vorgesehen, der als Eingangsgröße eine vorzeichenrichtige Summe der Gelenkkoordinaten $\theta_1$ bis $\theta_n$, der Winkelversätze $\Delta\theta$ und Istkoordinaten $\theta_j$ erhält.

Die Stellgröße des Lagereglers 12 dient als Eingangsgröße für eine nachgeschaltete Geschwindigkeitsregelung, wobei dieser Eingangsgröße eine Istwinkelgeschwindigkeit $\omega_j$ in einem Addierer 14 vorzeichenrichtig aufsummiert wird. Das Summensignal wird einem Geschwindigkeitsregler 15 (vorzugsweise ein PI-Regler) zugeführt.

Das Ausgangssignal der Geschwindigkeitsregelung bzw. des Geschwindigkeitsreglers 15 dient als Eingangsgröße für eine Stromregelung. Dieser Eingangsgröße wird in einem Addierer ein jeweiliges Motormoment M bzw. ein entsprechendes Äquivalent sowie ein Iststrom $I_j$ vorzeichenrichtig in einem Addierer 16 aufaddiert. Dieser Addierer 16 wie auch die anderen beiden Addierer 13 und 14 (allgemein: Verknüpfungselemente) besitzen gegebenenfalls eine Umrechnungs- bzw. Verstärkungsfunktionalität, um die jeweils gewünschte Größe beispielsweise durch Multiplikation zu erhalten. Das Ausgangssignal des Addierers 16 wird einem Stromregler 17 zugeführt, der die Stellgröße für den Motor, nämlich den Strom i ausgibt.

Der Übersichtlichkeit halber ist in FIG 2 eine Störkraftkompensation nur für eine einzige Achse dargestellt. Entsprechende Berechnungen und Regelungen werden jedoch vorzugsweise für alle Achsen des Systems durchgeführt. Im einfachsten Fall werden so für jede Achse eigene Stromwerte berechnet, mit denen die jeweiligen Motoren angesteuert werden. Das Mehrkörpermodell 10 lässt sich also dazu verwenden, statische Störkräfte aus bekannten Lastfällen durch Motorkräfte während der gesamten Bewegung, also stets für die aktuellen Koordinaten und die aktuellen Istwerte, zu kompensieren.

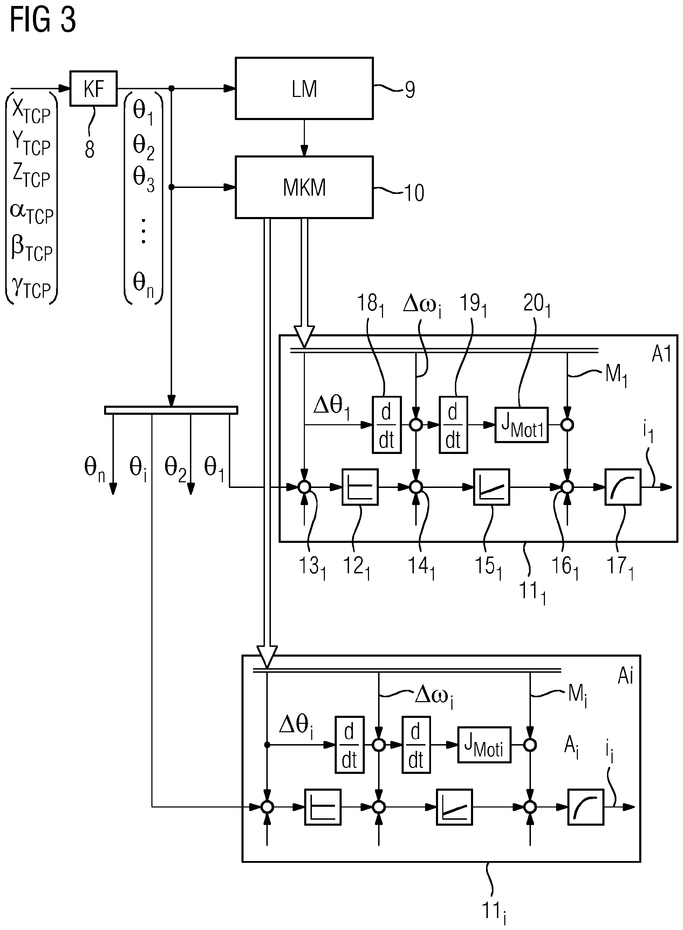

Weiterhin kann das Mehrkörpermodell verwendet werden, um quasi-statische Lastfälle sowie Beschleunigungsvorgänge zu kompensieren. Die Beschleunigung einer Achse und die dadurch erzeugte Gegenkraft im Gelenk können gegebenenfalls aufgrund der Nachgiebigkeit des Gebildes zu parasitären Bewegungen am TCP führen. Wenn sich beispielsweise eine beschleunigte Achse auf einer zweiten Achse abstützt, ändert die zweite Achse aufgrund ihrer endlichen Steifigkeit ihre Position oder Neigung. Solche und ähnliche parasitären Bewegungen können mit Hilfe von Ausgleichsbewegungen der restlichen Achsen kompensiert werden. In dem Fall wird die berechnete Ausgleichsbewegung als Drehzahl und Drehmoment vorgesteuert. Eine solche Vorsteuerung ist für n Achsen A1, A2, ..., Ai, ..., An in FIG 3 wiedergegeben. Die Regelungsstruktur basiert auf derjenigen von FIG 2. Gleiche Elemente sind mit gleichen Bezugszeichen versehen. Im Folgenden werden lediglich die Unterschiede herausgestellt.

Wie erwähnt, ist in FIG 2 der Übersichtlichkeit halber lediglich die Regelungseinheit 11 für eine einzige Achse dargestellt. In FIG 3 ist für zwei ausgewählte orthogonalen Achsen A1 und Ai von A1 bis An die jeweilige Regelungseinheit $11_1$ und $11_i$ von $11_1$ bis $11_n$ wiedergegeben. Die Regelungseinheit $11_1$ erhält als Eingangsgrößen die Gelenkkoordinate $\theta_1$ von der Transformationseinheit 8 und den Winkelversatz $\Delta\theta_1$, einen Geschwindigkeitsversatz $\Delta_{\omega 1}$ sowie ein Ausgleichsmoment $M_1$ von dem Mehrkörpermodell 10. In gleicher Weise erhält die Regelungseinheit $11_i$ die Gelenkkoordinate $\theta_i$ von der Transformationseinheit 8 und den Winkelversatz $\Delta\theta_2$, einen Geschwindigkeitsversatz $\Delta\omega_i$ sowie ein Ausgleichsmoment $M_i$ von dem Mehrkörpermodell 10.

Alle n Regelungseinheiten $11_1$ bis $11_n$ sind strukturell gleich aufgebaut. Daher wird hier lediglich die erste Regelungseinheit $11_1$ im Detail beschrieben. Sie basiert auf der Regelungseinheit 11 von FIG 2, auf deren Beschreibung hier nochmals verwiesen wird. Es ergeben sich entsprechend der Lageregler $12_1$, der Geschwindigkeitsregler $15_1$ und der Stromregler $17_1$ sowie die Addierer $13_1$, $14_1$ und $16_1$. In der Regelungseinheit $11_1$ ist hier zusätzlich ein erster Differenzierer $18_1$ vorgesehen, mit dem aus dem Winkelversatz $\Delta\theta_1$ eine zusätzliche Führungsgröße unter Berücksichtigung des Geschwindigkeitsversatzes $\Delta\omega_1$ für die Geschwindigkeitsregelung ermittelt wird, wobei diese Führungsgröße in dem Addierer $14_1$ berücksichtigt wird. Mit Hilfe eines zweiten Differenzierers $19_1$ wird diese weitere Geschwindigkeitsführungsgröße in eine Beschleunigungsgröße umgesetzt und anschließend in einem Multiplizierer $20_1$ mit einer Achsengesamtträgheit $J_{Mot1}$ multipliziert. Der resultierende Wert wird schließlich unter Berücksichtigung des Ausgleichsmoment Mi dem Addierer $16_1$ zur Verfügung gestellt. Schließlich resultiert das Stromsignal ii zur Ansteuerung der ersten Achse. In analoger Weise werden die Stromsignale ii in der Regelungseinheit $11_i$ erzeugt. Auf diese Weise können parasitäre Bewegungen, die aufgrund einer quasi-statischen Kraft entstehen, durch entsprechende Ausgleichsbewegungen kompensiert werden.

Weiterhin kann aus dem Mehrkörpermodell 10 für jede Stellung die auf den jeweiligen Motor bezogene Achsenträgheit berechnet werden. Die Achsenträgheit wird hierzu aus der mit dem Starrkörpermode (Eigenfrequenz 0 Hz) assoziierten modalen Masse ermittelt. Dieser Starrkörpermode ist rein theoretischer Natur und bezeichnet eine Bewegung ohne jegliche Schwingung. Für die Berechnung muss also jeweils nur ein Motor sich frei bewegen dürfen. Die restlichen Achsen sind jeweils geklemmt. Zur Berechnung der modalen Masse ist es hinreichend, nur den dem Starrkörpermode assoziierten Eigenvektor zu kennen. Die Pseudo-Inversion des Eigenvektors ist trivial und ist für den Rechenprozess weniger belastend als die Inversion einer kompletten Matrix.

Die Bestimmung des zum Starrkörpermode assoziierten Eigenvektors kann auf einfache Weise erfolgen, ohne Betrachtung der restlichen Eigenwerte und -vektoren. Die Methodik wird am Beispiel einer beliebigen quadratischen Matrix A erklärt. Für die Matrix A sind die Eigenwerte $\lambda$ und die dazugehörigen Eigenvektoren $X_\lambda$ die Lösungen des folgenden Gleichungssystems:

$$AX_\lambda = \lambda X_\lambda$$

Für die genannte Aufgabenstellung darf angenommen werden, dass die Matrix A nur einen einzigen Starrkörpermode besitzt. Dies bedeutet, dass für $\lambda=0$ der Lösungsraum ein eindimensionaler Vektorraum ist. Die Bestimmung des Basisvektors erfordert die Lösung eines einfachen Gleichungssystems:

$$AX_\lambda = 0$$

Die Lösung des linearen Gleichungssystems kann beispielsweise mit Hilfe des Algorithmus "eigen" optimiert werden. Das Ergebnis ist der gesuchte Eigenvektor $X_\lambda$:

$$X_\lambda = \begin{pmatrix} x_1 \\ x_2 \\ \vdots \\ x_j \\ \vdots \\ x_n \end{pmatrix}$$

Für die Berechnung der modalen Massen wird der pseudo-inverse Vektor $X_{i\lambda}$ benötigt. Der Vektor kann elementweise konstruiert werden. $X_{i\lambda}$ erfüllt folgende Bedingung: $X_{i\lambda}^T X_\lambda = 1$.

$$X_{i\lambda} = \frac{1}{n_0} \begin{pmatrix} x_{i1} \\ x_{i2} \\ \vdots \\ x_{ij} \\ \vdots \\ x_{in} \end{pmatrix} \text{wobei} \quad \forall j, \begin{cases} x_{ij} = \frac{1}{x_j} \; f\ddot{u}r \, x_j \neq 0 \\ x_{ij} = 0 \; sonst \end{cases}$$

Und $n_0$ die Anzahl an Elementen des Vektors $X_\lambda$ ungleich null.

Für die Bestimmung der modalen Masse wird die Matrix, deren Starrkörpermode gesucht wird (A), aus folgendem Differenzialgleichungssystem abgeleitet:

$$\begin{cases} M\ddot{X} + KX = 0 \\ X_{red} = T_j X \end{cases}$$

wobei M und K den Massen- und Steifigkeitsmatrizen des Systems mit freien Motoren entsprechen. $T_j$ ist die Transformationsmatrix, die den Zwangsbedingungen entspricht, womit alle Motoren bzw. Achsen, außer dem/der j-ten, geklemmt werden. Der reduzierte Vektor $X_{red}$ enthält nur noch die Zustandsgrößen derjenigen Freiheitsgrade, die die Struktur auf Grund der Gelenke besitzt, während der Zustandsvektor X alle Freiheitsgrade aufweist. Da dem Starrkörpermode keine modale Dämpfung zugeordnet wird, kann die Dämpfungsmatrix aus dem Gleichungssystem herausgenommen werden.

Das Gleichungssystem für die Bestimmung des Eigenvektors lautet in dem Fall:

$$\left(T_j M T_j^T\right)^{-1} T_j K T_j^T X_\lambda = 0$$

Die Gesamtträgheit wird aus den berechneten Größen abgeleitet:

$$J_{\Sigma,j} = X_{i\lambda}^T T_j M T_j^T X_\lambda = 0$$

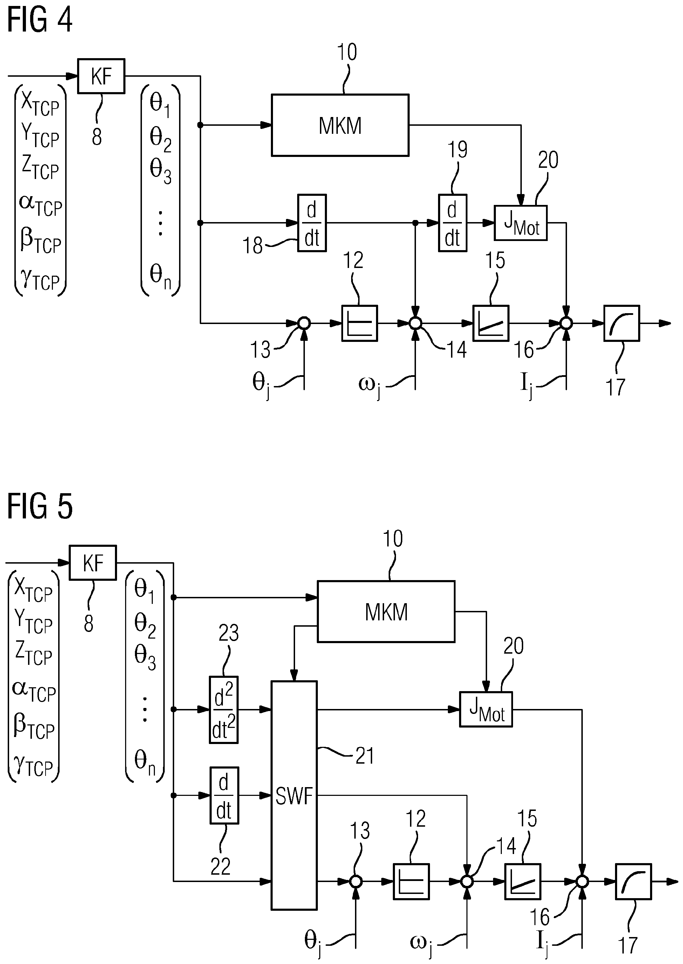

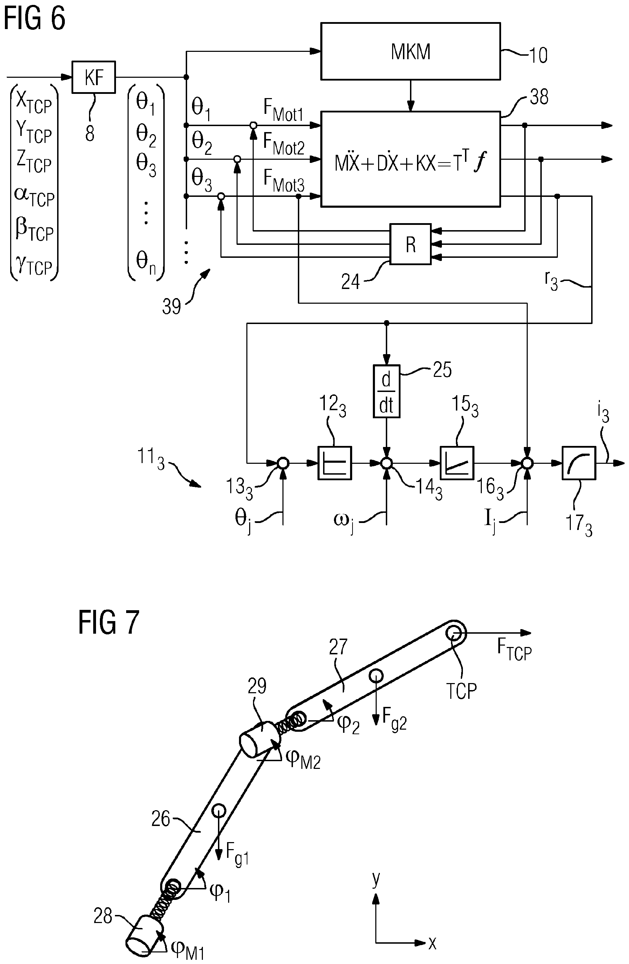

FIG 4 zeigt hierzu eine prinzipielle Darstellung der Struktur der Momentensteuerung. Der Koeffizient $J_{Mot}$ ist die für die betroffene Achse auf den Motor bezogene Achsengesamtträgheit. Sie wird in der Regelungseinheit 11, die strukturell der Regelungseinheit $11_1$ von FIG 3 entspricht, in dem Multiplizierer 20 berücksichtigt, der die zusätzliche Führungsgröße für den Addierer 16 bildet. Auch die übrigen Elemente der Regelungseinheit 11 entsprechen denjenigen der Regelungseinheit $11_1$ von FIG 3 und sind in FIG 4 lediglich ohne Index "1" dargestellt. Der Übersicht halber ist ferner in FIG 4 auf die Darstellung des Lastmodells 9 verzichtet, obgleich es natürlich vorhanden ist. Gleiches gilt für die nachfolgenden Figuren 5 und 6.

Das Mehrkörpermodell kann also dazu verwendet werden, für jede Stellung die auf die Motoren bezogenen Achsenträgheiten $J_{Mot}$ zur Parametrierung der Momentenvorsteuerung zu berechnen. Daher besitzt das Mehrkörpermodell 10 in FIG 4 einen speziellen Ausgang, der ein Signal an den Multiplizierer 20 zur Anpassung der Achsenträgheiten $J_{Mot}$ liefert.

Das obige Mehrkörpermodell, das vorzugsweise auf dem genannten linearen Differenzialgleichungssystem beruht, kann, wie oben dargelegt wurde, zur Berechnung der auf die jeweiligen Motoren bezogenen Achsenträgheiten für jede Stellung verwendet werden. Daraus können dann in einem gegebenenfalls erweiterten Modell maximale Achsenbeschleunigungen bestimmt werden. Die jeweils aktuelle maximale Achsenbeschleunigung während der Bewegung des Systems hat durchaus Einfluss auf den Verlauf der Bewegung.

Anhand der vom Modell beschriebenen dynamischen Eigenschaften können die Führungsgrößen so angepasst werden, dass die Anregung der Eigenfrequenzen vermieden wird. Dafür können verschiedene Verfahren eingesetzt werden:

- Lagesollwertfilter, dessen Eigenschaften aus dem Modell (d.h. Mehrkörpermodell) abgeleitet werden (z. B. Nullstellen; vgl. FIG 5) und
- Entwurf einer mehrdimensionalen Zustandsregelung für das Modell und Vorsteuerung der dadurch entstehenden Stellgrößen (vgl. FIG 6).

Die Abbildung von FIG 5, die eine strukturelle Übersicht einer Vorsteuerung mit Sollwertfilter zeigt, ist der Übersicht halber wieder auf eine Achse beschränkt. Ebenso wie in FIG 4 wurde auch auf die Darstellung des Lastmodells 9 verzichtet. Die übrigen in FIG 5 mit den gleichen Bezugszeichen wie in den vorausgehenden Figuren dargestellten Komponenten besitzen die gleiche Funktionalität wie dort. Es wird also auf die jeweilige dortige Beschreibung verwiesen.

Im Unterschied zu den vorausgehenden Ausführungsformen ist hier ein Sollwertfilter 21 vorgesehen (SWF). Dieser erhält als Eingangssignal nicht nur eine Lageinformation über die Gelenkkoordinaten $\theta_1$ bis $\theta_n$ direkt, sondern auch ein mittels eines Differenzierers 22 daraus gebildetes Geschwindigkeitssignal und mittels eines Zweifachdifferenzierers 23 daraus gebildetes Beschleunigungssignal. Aus diesen drei Signalen bildet das Sollwertfilter 21 ein gefiltertes Beschleunigungssignal, welches der Verknüpfungseinheit 20 zugeführt wird, welche ihrerseits das gefilterte Beschleunigungssignal mit der vom Mehrkörpermodell 10 gelieferten Achsengesamtträgheit $J_{Mot}$ und ein entsprechendes Resultat dem Addierer 16 für die Stromregelung als Führungsgröße zur Verfügung stellt. Neben dieser Vorsteuerung des Stroms für die Stromregelung wird die Geschwindigkeitsregelung mit einem gefilterten Geschwindigkeitssignal, das das Sollwertfilter 21 aus den einfach differenzierten Gelenkkoordinaten gewinnt, vorgesteuert. Dazu wird das gefilterte Geschwindigkeitssignal in den Addierer 14 eingegeben.

Schließlich erfolgt eine Vorsteuerung bzw. Führung der Lageregelung durch ein gefiltertes Lagesignal, das das Sollwertfilter 21 von den Gelenkkoordinaten $\theta_1$ bis $\theta_n$ erhält. Dieses gefilterte Lagesignal wird dem Addierer 13 als Führungsgröße zugeführt.

Mit dem Sollwertfilter 21 können dann spezielle Eigenfrequenzen des Systems stellungsabhängig, d.h. jeweils zeitlich aktuell während der Beschleunigung, ausgefiltert werden. So ändern sich beispielsweise die Eigenfrequenzen eines Roboters, wenn er seine Armstellung verändert. Im ausgestreckten Zustand des Arms sind nämlich die Eigenschwingungen langsamer als im angezogenen Zustand des Arms. Somit kann auch während einer Bewegung vorab auf die Eigenfrequenzen des Roboters reagiert werden. So werden beispielsweise Frequenzen bei 15 Hz ausgefiltert, wenn der Roboter den Arm ausgestreckt hat und Frequenzen bei 17 Hz ausgefiltert, wenn der Arm eine Zwischenstellung einnimmt, und Frequenzen bei 20 Hz ausgefiltert, wenn der Arm angezogen ist.

Eine weitere Möglichkeit zur Anpassung der Führungsgrößen ist in dem Ausführungsbeispiel von FIG 6 dargestellt. Auch hier ist das System wie in FIG 5 vereinfacht. Zur Anpassung der Führungsgrößen wird hier ein Modell 38 der Strecke in das System implementiert. Das Modell 38 beruht z.B. auf dem gleichen linearen Differenzialgleichungssystem wie das Mehrkörpermodell 10. Dieses Modell 38 der Strecke ist in einen Regelkreis 39 eingebettet, welcher hier für alle drei Achsen eingezeichnet ist und einen Regler 24 im Rückkopplungszweig besitzt. Durch den Regelkreis 39 ergibt sich eine ideal geregelte Strecke, deren Regelgröße $r_3$ (in FIG 6 nur diejenige von der dritten Achse der n Achsen eingezeichnet) als Führungsgröße für die Regelungseinheit $11_3$ verwendet wird. Dazu wird sie in den Addierer $13_3$ für die Lageregelung eingegeben. Das Resultat des Addierers $13_3$ wird an den PI-Regler $12_3$ weitergeleitet, dessen Resultat wiederum an den Addierer $14_3$ der Geschwindigkeitsregelung weitergeführt wird. Ein Differenzierer 25 erzeugt aus der Regelgröße r3 ein Geschwindigkeitssignal, welches ebenfalls dem Addierer $14_3$ zugeführt wird. Nach vorzeichenrichtiger Summenbildung wird das Summensignal dem PI-Regler $15_3$ der Geschwindigkeitsregelung zugeführt, dessen Ausgangssignal an den Addierer $16_3$ der Stromregelung weitergeleitet wird. In diesen Addierer $16_3$ wird zusätzlich die Stellgröße $F_{Mot3}$ der idealen Regelstrecke bzw. des Modells 38 geleitet. Den Addierern $13_3$, $14_3$ und $16_3$ werden außerdem die achsspezifischen Istwerte $\theta_j$, $\omega_j$ und $I_j$ zugeführt. Das Summensignal des Addierers $16_3$ wird schließlich dem Stromregler $17_3$ zugeführt, aus dem das resultierende Stromsignal $i_3$ für die dritte Achse hervorgeht. Strukturell die gleichen Regelungseinheiten wie die Regelungseinheit $11_3$ sind für die übrigen n-1 Achsen vorzusehen. Der Übersicht halber sind sie jedoch in FIG 6 nicht dargestellt.

Ergänzend sei noch bemerkt, dass das Mehrkörpermodell 10 jeweils die momentan gültigen Matrizen M, D und K an das Modell 38 einliefert.

Darüber hinaus werden die in der idealen Regelung 39 rückgeführten Größen zusammen mit den Gelenkkoordinaten zu den Stellgrößen $F_{Mot1}$, $F_{Mot2}$, $F_{Mot3}$ bis $F_{Motn}$, die jeweils Kräfte darstellen, der Regelstrecke verknüpft.

Ein Modell der realen Strecke kann somit dazu verwendet werden, um eine Anpassung der Führungsgrößen der realen Regelungseinheit zur Reduzierung der Anregung der Eigenfrequenzen durchzuführen.

Bei der Berücksichtigung aller erwarteten Lastfälle und der Verwendung einer richtigen Momentenvorsteuerung steht zu jedem Zeitpunkt eine passende Abschätzung der Motormomente zur Verfügung, die zu Überwachungszwecken weiter verwendet werden kann. Eine signifikante Abweichung des gemessenen Motormoments bzw. des Iststromwerts $I_i$ vom berechneten Motormoment, das von der Regelstrecke bzw. dem Modell 38 ausgegeben wird, würde auf ein unerwartetes Ereignis (z. B. eine Kollision) hinweisen. Das Modell 38 kann also außer zur Anpassung der Führungsgrößen auch zur Überwachung der Motormomente verwendet werden.

FIG 7 zeigt ein konkretes Beispiel eines 2D-Roboters, mit dem die Möglichkeiten und Vorteile der Erfindung veranschaulicht werden können. Der skizzierte 2D-Roboter besitzt hier zwei Arme 26 und 27, die je von einem Motor 28, 29 bewegt werden können. An dem freien Ende des zweiten Arms 27 befindet sich der TCP. An ihm wirkt eine Kraft $F_{TCP}$ hier in waagrechter Richtung. Außerdem wird auf den ersten Arm 26 eine Gewichtskraft $F_{g1}$ und auf den zweiten Arm eine Gewichtskraft $F_{g2}$ ausgeübt.

Im Allgemeinen besitzt jeder der vier Körper 26 bis 29 sechs Freiheitsgrade. Da dies ein zweidimensonales, mechanisches Problem ist, genügen drei Koordinaten pro Körper zur vollständigen Beschreibung. Die Kinematik unterliegt des Weiteren folgenden Zwangsbedingungen:

- Arm 26 ist drehbar gegenüber dem Untergrund gelagert.
- Arm 27 ist drehbar gegenüber Arm 26 gelagert.
- Motor 28 kann sich relativ zum Untergrund nur drehen.
- Motor 29 wird mit Arm 26 mitbewegt und kann sich relativ zu Arm 26 nur drehen.

Die Lagebedingungen schränken die Bewegungsmöglichkeiten ein und werden als lineare Abhängigkeiten zwischen den Freiheitsgraden formuliert. Damit hat der 2D-Roboter nur noch vier unabhängige Bewegungsgrößen. Dies wird in FIG 7 anschaulich klar, wenn man die Winkellagen $\varphi_{M1}$, $\varphi_{M2}$ der Motoren 28 und 29 sowie die Winkellagen $\varphi_1$, $\varphi_2$ der Arme 26 und 27 vorgibt.

Der TCP (Tool Center Point) ist der für die Bewegung relevante Bezugspunkt. Die Koordinatentransformation zwischen der kartesischen Position des TCP und den Stellungen der Arme lautet:

$$\begin{bmatrix} x_{TCP} \\ y_{TCP} \end{bmatrix} = \begin{bmatrix} l_1 \cos(\varphi_1) + l_2 \cos(\varphi_1 + \varphi_2) \\ l_1 \sin(\varphi_1) + l_2 \sin(\varphi_1 + \varphi_2) \end{bmatrix}$$

Ebenso lassen sich die kinematischen Beziehungen für andere ausgewiesene Punkte aufstellen, z. B. für die Schwerpunkte der Körper oder das bewegte Drehgelenk. In linearisierter Darstellung (Jacobimatrix) bilden diese die Einträge der Transformationsmatrix T zur Umrechnung der Koordinaten.

Die Linearisierung der Mechanik-Gleichungen erfolgt in einem gegebenen Betriebspunkt. Diese Referenzposition ist für den Moment "eingefroren". Der Zustandsvektor X enthält nun die Auslenkung der Struktur aus diesem Arbeitspunkt.

Die Motoren und die Arme sind nicht ideal steif verbunden, sondern über eine elastische Feder, die die Nachgiebigkeit der Antriebsstränge modelliert. Für einen Arbeitspunkt kann somit eine Steifigkeitsmatrix K angegeben werden, die die Rückstellmomente der Federn als lineare Reaktion auf eine Auslenkung X beschreibt.

Auf die Struktur wirken die Antriebsmomente der Motoren, die Gewichtskräfte der Körper und gegebenenfalls eine zusätzliche Kraft am TCP. Damit ist das beschreibende Gleichungssystem vollständig. Es beschreibt die Zusammenhänge zwischen Bewegung und Kräften.

Wirken keine äußeren Kräfte, so sind die Federn stationär entspannt und die Winkellagen von Motor und Arm sind jeweils gleich. Wirken Kräfte (z. B Gravitation $F_{g1}$ und $F_{g2}$ oder eine externe Kraft $F_{TCP}$), so werden die Federn ausgelenkt und die Winkellagen $\varphi_{M1}$ und $\varphi_{M2}$ der Motoren 28 und 29 sowie die Winkellagen $\varphi_1$ und $\varphi_2$ der Arme 26 und 27 sind nicht gleich.

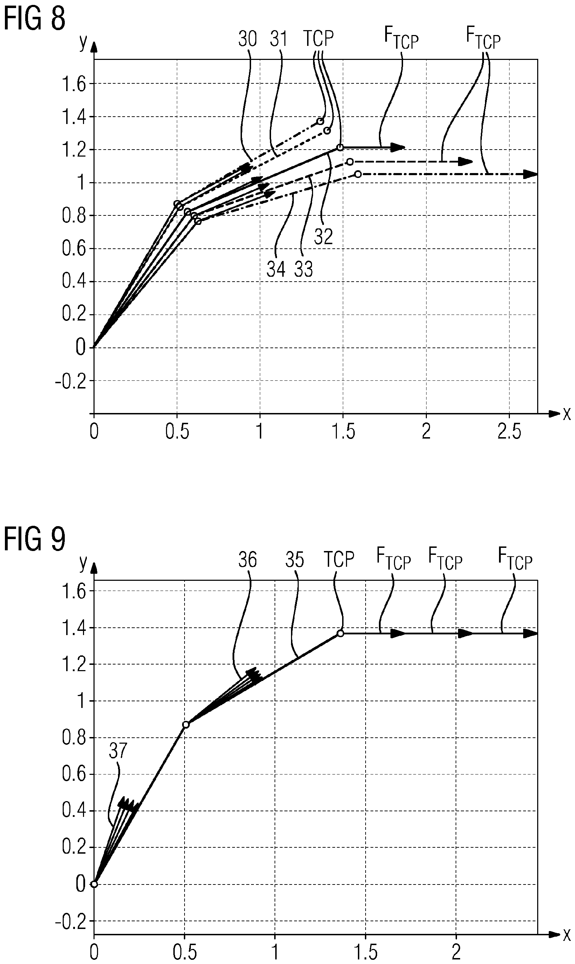

FIG 8 zeigt Ergebnisse von Simulationsrechnungen, wie sich die Stellung des Roboters von FIG 7 gemäß einem Steuerungsverfahren nach dem Stand der Technik einstellt (Regelung der Motorlage, keine Kompensation). Die Referenzstellung ist jeweils $\varphi_1$=60° und $\varphi_2$=-30°. Der Roboter ist gemäß Linie 30 in y-Richtung am aufrechtesten, wenn keine Gravitation und keine externe Kraft am TCP wirken. Die Linien 31, 32, 33 und 34 verdeutlichen die Stellungen des 2D-Roboters bei Gravitation (in negativer y-Richtung) und verschiedenen Werten für die externe Kraft $F_{TCP}$ am TCP (Maß = Länge des jeweiligen Kraftpfeils) .

Es ist deutlich zu erkennen, wie die Struktur des Roboters beim Einfluss der äußeren Kräfte nachgibt. Die beiden Motoren bleiben jeweils an der gleichen Position stehen, während sich die Arme bewegen.

FIG 9 zeigt Ergebnisse von Simulationsrechnungen, wie sich die Stellung des Roboters von FIG 7 gemäß dem Verfahren aus der vorliegenden Erfindung einstellt. Die Referenzstellung ist wiederum $\varphi_1$=60° und $\varphi_2$=-30°. Die Linie 35 zeigt die Stellung des 2D-Roboters bei Gravitation und verschiedenen Werten für eine externe Kraft am TCP. Der Roboter ändert aufgrund der erfindungsgemäßen dynamischen Regelung seine Stellung nicht, und zwar auch dann nicht, wenn sich die Kraft $F_{TCP}$ ändert.

Das oben entwickelte Gleichungssystem für die Bewegungen und die Kräfte kann wahlweise nach den Kräften (bei gegebener Bewegung) oder nach der Verlagerung (bei gegebenen Kräften und Momenten) umgestellt werden. Die Anzahl der unabhängigen Größen ist aber in jedem Fall gleich (hier vier). Das erfindungsgemäße Verfahren wertet vorzugsweise das Gleichungssystem nun derart aus, dass ein Teil der Bewegungskoordinaten (hier Position des TCP) und ein Teil der wirkenden Kräfte vorgegeben wird und gezielt nach den verbleibenden freien Größen aufgelöst wird (hier Drehmoment und Auslenkung der Motoren).

Wie oben bereits angedeutet wurde, verdeutlicht FIG 9, dass sich die Struktur unter dem Einfluss der äußeren Kräfte nicht bewegt. Die beiden Motoren kompensieren die Auslenkung, indem sie die nachgiebigen Antriebsstränge um das erforderliche Maß vorspannen (aufgefächerte Pfeile 36 und 37). Die beiden Arme bleiben jeweils an der gleichen Position stehen.

**Patentansprüche**

1.   Vorrichtung zum Steuern und Regeln einer Bewegung eines Systems mit mehreren, kinematisch zusammenwirkenden Einzelkörpern (1, 2, 4, 6, 26, 27), von denen mindestens einer mit einem Antrieb (3, 5, 7, 28, 29) bewegbar ist, umfassend

- eine Lastrecheneinrichtung (9) zum Berechnen je eines Kraftvektors für jeden der Einzelkörper in Abhängigkeit von vorgegebenen Sollkoordinaten ($X_{TCP}$, $Y_{TCP}$, $Z_{TCP}$, $\alpha_{TCP}$, $\beta_{TCP}$, $\gamma_{TCP}$) fortlaufend während der Bewegung des Systems,
- eine Momentrecheneinrichtung (10) zum Berechnen mindestens einer die Kraftvektoren kompensierenden Ausgleichsgröße auf der Basis der Sollkoordinaten ($X_{TCP}$, $Y_{TCP}$, $Z_{TCP}$, $\alpha_{TCP}$, $\beta_{TCP}$, $\gamma_{TCP}$) und der Kraftvektoren fortlaufend während der Bewegung,

- eine Regelungseinheit (11) zum Regeln einer kraftbildenden Größe für den mindestens einen Antrieb in Abhängigkeit von den Sollkoordinaten ($X_{TCP}$, $Y_{TCP}$, $Z_{TCP}$, $\alpha_{TCP}$, $\beta_{TCP}$, $\gamma_{TCP}$) und der mindestens einen Ausgleichsgröße fortlaufend während der Bewegung und

- ein Modell (38) einer Regelstrecke des Systems, wobei mit dem Modell (38) mindestens eine ideale Führungsgröße für den Antrieb oder ein ideales Drehmoment des Antriebs zur Überwachung eines Istdrehmoments des Antriebs berechenbar ist, wobei

- die Lastrecheneinrichtung (9) zum Berechnen des jeweiligen Kraftvektors ein Lastmodell heranzieht, in dem eine Stelle, Richtung und Amplitude einer dynamischen Krafteinleitung in einem der Einzelkörper (1, 2, 4, 6, 26, 27) berücksichtigbar sind.

2. Vorrichtung zum Steuern und Regeln nach Anspruch 1, wobei die Ausgleichsgröße ein Ausgleichsdrehmoment, eine Ausgleichskraft, eine Ausgleichsgeschwindigkeit oder eine Ausgleichsposition ist.

3. Vorrichtung zum Steuern und Regeln nach einem der vorhergehenden Ansprüche, wobei die Regelungseinheit (11) eine kaskadierte Lageregelung, Geschwindigkeitsregelung und Druck- oder Stromregelung aufweist.

4. Vorrichtung zum Steuern und Regeln nach einem der vorhergehenden Ansprüche, wobei die Momentrecheneinrichtung (10) zum Berechnen des mindestens einen Ausgleichsmoments ein Mehrkörpermodell heranzieht, in dem eine Masse und/oder eine Elastizität und/oder eine Dämpfung und/oder eine lineare Abhängigkeit von Freiheitsgraden jeweils jedes der Einzelkörper (1, 2, 4, 6, 26, 27) berücksichtigt ist/sind.

5. Vorrichtung zum Steuern und Regeln nach Anspruch 4, wobei das Mehrkörpermodell auf einem linearen Differenzialgleichungssystem beruht.

6. Vorrichtung zum Steuern und Regeln nach Anspruch 5, wobei das Differenzialgleichungssystem auf einer Massenmatrix, einer Dämpfungsmatrix und einer Steifigkeitsmatrix jeweils bezogen auf die Einzelkörper (1, 2, 4, 6, 26, 27) beruht.

7. Vorrichtung zum Steuern und Regeln nach einem der vorhergehenden Ansprüche, wobei in dem Mehrkörpermodell Trägheitskräfte und/oder Kreiselkräfte, die jeweils auf die Einzelkörper (1, 2, 4, 6, 26, 27) wirken, berücksichtigt sind.

8. Vorrichtung zum Steuern und Regeln nach einem der vorhergehenden Ansprüche, wobei mit der Momentrecheneinrichtung (10) eine maximale Beschleunigung eines der Einzelkörper (1, 2, 4, 6, 26, 27) oder eines Verbunds mehrerer der Einzelkörper fortlaufend während der Bewegung berechenbar ist.

9. Vorrichtung zum Steuern und Regeln nach einem der vorhergehenden Ansprüche, wobei die Momentrecheneinrichtung (10) und die Regeleinheit (11) dazu ausgelegt sind, dass sie fortlaufend während der Bewegung die Anregung mindestens einer Eigenfrequenz des Systems reduzieren.

10. Verfahren zum Steuern und Regeln einer Bewegung eines Systems mit mehreren, kinematisch zusammenwirkenden Einzelkörpern (1, 2, 4, 6, 26, 27), von denen mindestens einer von einem Antrieb (3, 5, 7, 28, 29) bewegt wird, durch

- Berechnen je eines Kraftvektors für jeden der Einzelkörper (1, 2, 4, 6, 26, 27) in Abhängigkeit von vorgegebenen Sollkoordinaten ($X_{TCP}$, $Y_{TCP}$, $Z_{TCP}$, $\alpha_{TCP}$, $\beta_{TCP}$, $\gamma_{TCP}$) fortlaufend während der Bewegung des Systems,

- Berechnen mindestens einer die Kraftvektoren kompensierenden Ausgleichsgröße auf der Basis der Sollkoordinaten ($X_{TCP}$, $Y_{TCP}$, $Z_{TCP}$, $\alpha_{TCP}$, $\beta_{TCP}$, $\gamma_{TCP}$) und der Kraftvektoren fortlaufend während der Bewegung und

- Regeln einer kraftbildenden Größe für den mindestens einen Antrieb in Abhängigkeit von den Sollkoordinaten ($X_{TCP}$, $Y_{TCP}$, $Z_{TCP}$, $\alpha_{TCP}$, $\beta_{TCP}$, $\gamma_{TCP}$) und der mindestens einen Ausgleichsgröße fortlaufend während der Bewegung, wobei

- mit einem Modell (38) einer Regelstrecke des Systems mindestens eine ideale Führungsgröße für den Antrieb oder ein ideales Drehmoment des Antriebs zur Überwachung eines Istdrehmoments des Antriebs berechnet wird, wobei

- zum Berechnen des jeweiligen Kraftvektor ein Lastmodell herangezogen wird, in dem eine Stelle, Richtung und Amplitude einer dynamischen Krafteinleitung in einem der Einzelkörper (1, 2, 4, 6, 26, 27) berücksichtigt werden.

**Claims**

1. Apparatus for controlling and regulating a movement of a system comprising a plurality of individual elements (1, 2, 4, 6, 26, 27) which cooperate kinematically, at least one thereof being able to be moved by a drive (3, 5, 7, 28, 29), comprising

   - a load calculating device (9) for calculating one respective force vector for each of the individual elements depending on predetermined reference coordinates ($X_{TCP}$, $Y_{TCP}$, $Z_{TCP}$, $\alpha_{TCP}$, $\beta_{TCP}$, $\gamma_{TCP}$) continuously during the movement of the system,
   - a torque calculating device (10) for calculating at least one compensating variable compensating the force vectors based on the reference coordinates ($X_{TCP}$, $Y_{TCP}$, $Z_{TCP}$, $\alpha_{TCP}$, $\beta_{TCP}$, $\gamma_{TCP}$) and the force vectors continuously during the movement,
   - a control unit (11) for controlling a force-producing variable for the at least one drive depending on the reference coordinates ($X_{TCP}$, $Y_{TCP}$, $Z_{TCP}$, $\alpha_{TCP}$, $\beta_{TCP}$, $\gamma_{TCP}$) and the at least one compensating variable continuously during the movement and
   - a model (38) of the control path of the system, wherein at least one ideal command variable for the drive or an ideal torque of the drive for monitoring an actual torque of the drive is able to be calculated by the model (38), wherein
   - the load calculating device (9) uses a load model for calculating the respective force vector, in which a point, direction and amplitude of a dynamic introduction of force in one of the individual elements (1, 2, 4, 6, 26, 27) can be considered.

2. Apparatus for controlling and regulating according to claim 1, wherein the compensating variable is a compensating torque, a compensating force, a compensating speed or a compensating position.

3. Apparatus for controlling and regulating according to one of the preceding claims, wherein the control unit (11) has a cascaded position control, speed control and pressure control or current control.

4. Apparatus for controlling and regulating according to one of the preceding claims, wherein the torque calculating device (10) uses a multi-element model for calculating the at least one compensating torque, in which a mass and/or a resilience and/or a damping and/or a linear dependence on degrees of freedom of each of the respective individual elements (1, 2, 4, 6, 26, 27) is/are considered.

5. Apparatus for controlling and regulating according to claim 4, wherein the multi-element model is based on a linear differential equation system.

6. Apparatus for controlling and regulating according to claim 5, wherein the differential equation system is based on a mass matrix, a damping matrix and a stiffness matrix, in each case relative to the individual elements (1, 2, 4, 6, 26, 27) .

7. Apparatus for controlling and regulating according to one of the preceding claims, wherein inertial forces and/or centrifugal forces which respectively act on the individual elements (1, 2, 4, 6, 26, 27) are considered in the multi-element model.

8. Apparatus for controlling and regulating according to one of the preceding claims, wherein by means of the torque calculating device (10) a maximum acceleration of one of the individual elements (1, 2, 4, 6, 26, 27) or a combination of a plurality of individual elements is able to be continuously calculated during the movement.

9. Apparatus for controlling and regulating according to one of the preceding claims, wherein the torque calculating device (10) and the control unit (11) are designed such that they continuously reduce the excitation of at least one natural frequency of the system during the movement.

10. Method for controlling and regulating a movement of a system comprising a plurality of individual elements (1, 2, 4, 6, 26, 27) which cooperate kinematically, at least one thereof being moved by a drive (3, 5, 7, 28, 29), by

    - calculating one respective force vector for each of the individual elements (1, 2, 4, 6, 26, 27) depending on predetermined reference coordinates ($X_{TCP}$, $Y_{TCP}$, $Z_{TCP}$, $\alpha_{TCP}$, $\beta_{TCP}$, $\gamma_{TCP}$) continuously during the movement of the system,

- calculating at least one compensating variable compensating the force vectors based on the reference coordinates ($X_{TCP}$, $Y_{TCP}$, $Z_{TCP}$, $\alpha_{TCP}$, $\beta_{TCP}$, $\gamma_{TCP}$) and the force vectors continuously during the movement and
- controlling a force-producing variable for the at least one drive depending on the reference coordinates ($X_{TCP}$, $Y_{TCP}$, $Z_{TCP}$, $\alpha_{TCP}$, $\beta_{TCP}$, $\gamma_{TCP}$) and the at least one compensating variable continuously during the movement, wherein
- at least one ideal command variable for the drive or an ideal torque of the drive is calculated by a model (38) of a control path of the system, for monitoring the actual torque of the drive, wherein
- a load model is used for calculating the respective force vector, in which a point, direction and amplitude of a dynamic introduction of force in one of the individual elements (1, 2, 4, 6, 26, 27) are considered.

**Revendications**

1. Dispositif de commande et de régulation d'un mouvement d'un système comportant plusieurs corps individuels à interaction cinématique (1, 2, 4, 6, 26, 27), dont au moins un peut être déplacé avec un entraînement (3, 5, 7, 28, 29) comprenant

   - un dispositif de calcul de charge (9) pour calculer un vecteur de force pour chacun des corps individuels en fonction de coordonnées de consigne prédéterminées ($X_{TCP}$, $Y_{TCP}$, $Z_{TCP}$, $\alpha_{TCP}$, $\beta_{TCP}$, $\gamma_{TCP}$) en continu pendant le mouvement du système,
   - un dispositif de calcul de moment (10) pour calculer au moins une variable de compensation compensant les vecteurs de force sur la base des coordonnées de consigne ($X_{TCP}$, $Y_{TCP}$, $Z_{TCP}$, $\alpha_{TCP}$, $\beta_{TCP}$, $\gamma_{TCP}$) et des vecteurs de force en continu pendant le mouvement,
   - une unité de régulation (11) pour réguler une variable génératrice de force pour l'au moins un entraînement en fonction des coordonnées de consigne ($X_{TCP}$, $Y_{TCP}$, $Z_{TCP}$, $\alpha_{TCP}$, $\beta_{TCP}$, $\gamma_{TCP}$) et de l'au moins une variable de compensation en continu pendant le mouvement et
   - un modèle (38) d'un système commandé du système, dans lequel le modèle (38) permet de calculer au moins une variable de guidage idéale pour l'entraînement ou un couple idéal de l'entraînement pour surveiller un couple réel de l'entraînement, dans lequel
   - le dispositif de calcul de charge (9) utilise un modèle de charge pour calculer le vecteur de force respectif, dans lequel la position, la direction et l'amplitude d'une introduction dynamique de la force dans l'un des corps individuels (1, 2, 4, 6, 26, 27) peuvent être prises en compte.

2. Dispositif de commande et de régulation selon la revendication 1, dans lequel la variable de compensation est un couple de compensation, une force de compensation, une vitesse de compensation ou une position de compensation.

3. Dispositif de commande et de régulation selon l'une quelconque des revendications précédentes, dans lequel l'unité de régulation (11) a une régulation de position en cascade, une régulation de vitesse et une régulation de pression ou de courant.

4. Dispositif de commande et de régulation selon l'une quelconque des revendications précédentes, dans lequel le dispositif de calcul de moment (10) utilise un modèle multi-corps pour calculer l'au moins un couple de compensation, dans lequel une masse et/ou une élasticité et/ou un amortissement et/ou une dépendance linéaire de degrés de liberté de chacun des corps individuels (1, 2, 4, 6, 26, 27) est/sont pris(e)(s) en compte.

5. Dispositif de commande et de régulation selon la revendication 4, dans lequel le modèle multi-corps est basé sur un système d'équation différentielle linéaire.

6. Dispositif de commande et de régulation selon la revendication 5, dans lequel le système d'équation différentielle est basé sur une matrice de masse, une matrice d'amortissement et une matrice de rigidité, chacune par rapport aux corps individuels (1, 2, 4, 6, 26, 27).

7. Dispositif de commande et de régulation selon l'une quelconque des revendications précédentes, dans lequel les forces d'inertie et/ou les forces gyroscopiques, qui agissent sur les corps individuels (1, 2, 4, 6, 26, 27), sont prises en compte dans le modèle multi-corps.

8. Dispositif de commande et de régulation selon l'une quelconque des revendications précédentes, dans lequel le dispositif de calcul de moment (10) permet de calculer une accélération maximale de l'un des corps individuels (1, 2, 4, 6, 26, 27) ou d'une combinaison de plusieurs des corps individuels en continu pendant le mouvement.

9. Dispositif de commande et de régulation selon l'une quelconque des revendications précédentes, dans lequel le dispositif de calcul de moment (10) et l'unité de régulation (11) sont conçus de manière à réduire en continu l'excitation d'au moins une fréquence naturelle du système pendant le mouvement.

10. Procédé de commande et de régulation d'un mouvement d'un système comportant plusieurs corps individuels à interaction cinématique (1, 2, 4, 6, 26, 27), dont au moins un peut être déplacé par un entraînement (3, 5, 7, 28, 29) par

- le calcul d'un vecteur de force pour chacun des corps individuels en fonction de coordonnées de consigne prédéterminées ($X_{TCP}$, $Y_{TCP}$, $Z_{TCP}$, $\alpha_{TCP}$, $\beta_{TCP}$, $\gamma_{TCP}$) en continu pendant le mouvement du système,
- le calcul d'au moins une variable de compensation compensant les vecteurs de force sur la base des coordonnées de consigne ($X_{TCP}$, $Y_{TCP}$, $Z_{TCP}$, $\alpha_{TCP}$, $\beta_{TCP}$, $\gamma_{TCP}$) et des vecteurs de force en continu pendant le mouvement et
- la régulation d'une variable génératrice de force pour l'au moins un entraînement en fonction des coordonnées de consigne ($X_{TCP}$, $Y_{TCP}$, $Z_{TCP}$, $\alpha_{TCP}$, $\beta_{TCP}$, $\gamma_{TCP}$) et de l'au moins une variable de compensation en continu pendant le mouvement, dans lequel
- un modèle (38) d'un système commandé du système permet de calculer au moins une variable de guidage idéale pour l'entraînement ou un couple idéal de l'entraînement pour surveiller un couple réel de l'entraînement, dans lequel
- un modèle de charge est utilisé pour calculer le vecteur de force respectif, dans lequel la position, la direction et l'amplitude d'une introduction dynamique de la force dans l'un des corps individuels (1, 2, 4, 6, 26, 27) sont prises en compte.

FIG 1

# FIG 2

FIG 3

# FIG 4

# FIG 5

## FIG 6

## FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1980374 A2
- EP 1403746 B1
- DE 102007024143 A1